# EUROPEAN PATENT APPLICATION

(11) **EP 3 072 610 A1**
(43) Date of publication of application: **28.09.2016**
(21) Application number: 16161575.2
(22) Date of filing: 22.03.2016
(51) Int. Cl.: B22F 3/105, F16D 55/36

(54) **AIRCRAFT BRAKE ROTOR CLIP REPAIR METHODS**

(30) Priority: 25.03.2015 US 201514668394
(71) Applicant: Goodrich Corporation, Charlotte, NC 28217-4578 (US)
(72) Inventor: WHITTLE, Scott, Springboro, OH 45066 (US); HERRMANN, Nathaniel John, Springfield, OH 45502 (US)
(74) Representative: Bridge, Kerry Ann

(57) **Abstract**

The present disclosure provides methods related to repair of aircraft brake assembly components using additive manufacturing processes. In various embodiments, methods (500) for modifying a brake assembly component may comprise measuring an actual dimension of the brake assembly component (501), determining a desired dimension of the brake assembly component (502), comparing the desired dimension to the actual dimension to define a modification specification (503), and using an additive manufacturing process to alter the brake assembly component (505). In various embodiments, methods for modifying a brake assembly component may comprise applying a cobalt-chromium alloy to the brake assembly component until the desired dimension is achieved.

## Description

### FIELD OF THE DISCLOSURE

The present disclosure relates to aircraft brake component repair methods and, more particularly, to methods for repairing aircraft brake rotor clips.

### BACKGROUND OF THE DISCLOSURE

Conventional aircraft wheel assemblies comprise rotating and stationary discs which stop the aircraft when compressed together. Typically, sacrificial rotor clips are coupled to brake rotor disc lugs to protect the rotor discs from excessive wear. Rotor clips are typically made of cobalt-chromium alloys and are discarded when wear exceeds allowable limits. Cobalt-chromium alloys are expensive when compared to other metals such as stainless steel. Further, under the high-compression scrubbing loads and vibration associated with braking, rotor clips may cause wear to rotor discs.

### SUMMARY OF THE DISCLOSURE

In various embodiments, the present disclosure provides methods for modifying a brake assembly component comprising measuring the actual dimensions of the component, determining the desired dimensions of the component, defining modification specifications, and modifying the component using an additive manufacturing process. In various embodiments, the component comprises a rotor clip for a brake rotor disc. In various embodiments, a cobalt-chromium alloy is utilized in the additive manufacturing process. In various embodiments, methods may be used to repair a worn component to its original state. In various embodiments, methods may be used to modify a component to compensate for damage to other brake assembly components. In various embodiments, the present disclosure provides methods for repairing a brake assembly comprising removing a component from the brake assembly, modifying the component using an additive manufacturing process, and placing a modified component in the brake assembly.

### BRIEF DESCRIPTION OF THE DRAWINGS

The accompanying drawings are included to provide a further understanding of the present disclosure and are incorporated in, and constitute a part of, this specification, illustrate various embodiments, and together with the description, serve to explain the principles of the disclosure.
FIG. 1 illustrates a perspective view of portions of a wheel and brake assembly in accordance with various embodiments;
FIG. 2 illustrates a perspective view of a brake disc stack in accordance with various embodiments;
FIG. 3a illustrates perspective view of a floating rotor clip in accordance with various embodiments;
FIG. 3b illustrates a perspective view of a rotor disc and a plurality of floating rotor clips in accordance with various embodiments;
FIG. 4a illustrates a perspective view of two half cap rotor clips in accordance with various embodiments;
FIG. 4b illustrates a perspective view of a rotor disc and a plurality of half cap rotor clips in accordance with various embodiments;
FIG. 5 illustrates a method of modifying a brake assembly component in accordance with various embodiments; and
FIG. 6 illustrates a method of repairing a brake assembly in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not of limitation.

For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact.

For example, in the context of the present disclosure, methods may find particular use in connection with rotor disc clips for aircraft brake systems. However, various aspects of the disclosed embodiments may be adapted for optimized performance with a variety of components, including bushings and stator clips, and in a variety of systems. As such, numerous applications of the present disclosure may be realized.

As used herein, the term "additive manufacturing" encompasses any method or process whereby a three-dimensional object is produced by creation of a substrate or material to an object, such as by addition of successive layers of a material to an object to produce a manufactured product having an increased mass or bulk at the end of the additive manufacturing process than the beginning of the process. In contrast, traditional manufacturing (e.g., forms of subtractive manufacturing) by machining or tooling typically relies on material removal or subtractive processes, such as cutting, lathing, drilling, grinding, and/or the like, to produce a final manufactured object that has a decreased mass or bulk relative to the starting workpiece. As used herein, the term "additive manufacturing" should not be construed to encompass fabrication or joining of previously formed objects.

A variety of additive manufacturing technologies are commercially available. Such technologies include, for example, fused deposition modeling, polyjet 3D printing, electron beam freeform fabrication, direct metal laser sintering, electron-beam melting, selective laser melting, selective heat sintering, selective laser sintering, stereolithography, multiphoton photopolymerization, digital light processing, and cold spray. These technologies may use a variety of materials as substrates for an additive manufacturing process, including various plastics and polymers, metals and metal alloys, ceramic materials, metal clays, organic materials, and the like. Any method of additive manufacturing and associated compatible materials, whether presently available or yet to be developed, are intended to be included within the scope of the present disclosure.

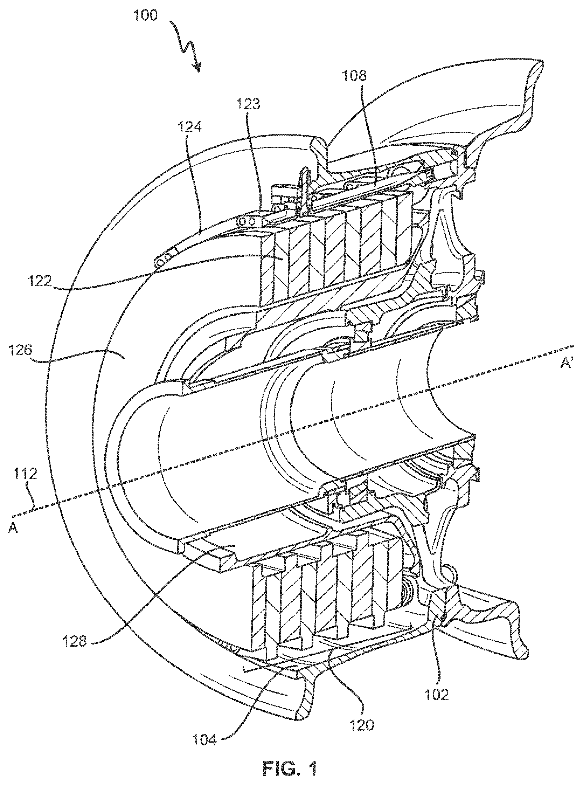

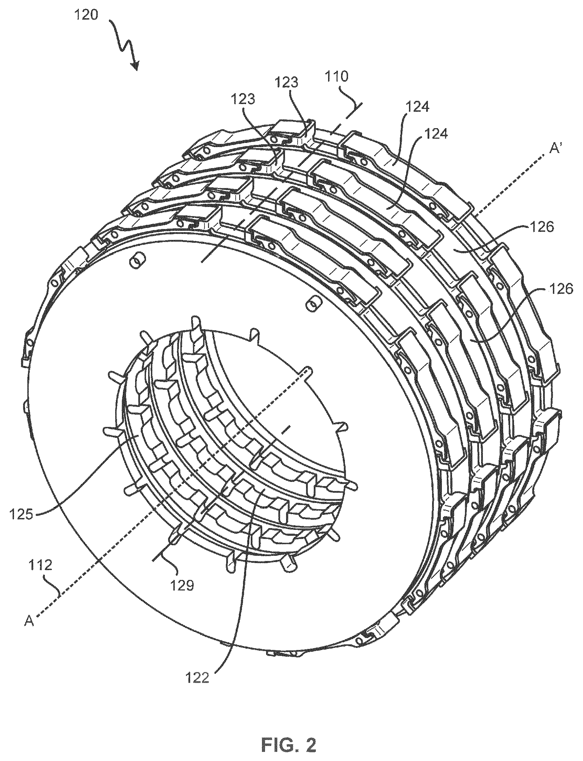

With reference to FIGs. 1 and 2, in accordance with various embodiments, a wheel and brake assembly 100 may comprise a wheel 102 having a radially inner surface 104. A plurality of torque bars 108 are oriented parallel to an axis of rotation 112 and are radially coupled to inner surface 104 of wheel 102. A brake assembly is disposed within wheel 102. The brake assembly comprises a brake stack 120 oriented about axis of rotation 112. Brake stack 120 may comprise a plurality of alternating stators 126 and rotor discs 122.

In various embodiments, rotor disc 122 may comprise a plurality of rotor disc lugs 124 disposed on an outer diameter of rotor disc 122. When rotor discs 122 are similarly oriented about axis of rotation 112, they may define a plurality of torque bar channels 110. In various embodiments, torque bars 108 may be disposed in torque bar channels 110 and may be configured to engage with rotor discs 122 as wheel 102, torque bars 108, and rotor discs 122 rotate about axis of rotation 112.

In various embodiments, stators 126 may be stationary and may be coupled to torque plate 128. Torque plate 128 may comprise a plurality of splines on its outer diameter. In various embodiments, stator 126 may comprise a plurality of stator lugs 125 disposed on an inner diameter of stator 126. When stators 126 are similarly oriented about axis of rotation 112, they may define a plurality of torque plate spline channels 129. In various embodiments, splines may be disposed in torque plate spline channels 129 and may be configured to couple stators 126 to torque plate 128, thereby preventing rotation of stators 126.

In various embodiments, actuation of the brake assembly may cause the application of force to brake stack 120 in an axial direction-that is, from A to A' along axis of rotation 112-thereby causing compression of brake stack 120 along A to A'. In various embodiments, compression of brake stack 120 may slow the rotation of rotor discs 122, torque bars 108, and wheel 102.

In various embodiments, brake assembly 100 may further comprise a plurality of rotor clips 123. Rotor clips 123 maybe coupled to rotor disc lugs 124. In various embodiments, rotor clips 123 may be disposed between rotor disc lugs 124 and torque bar 108 and/or between rotor disc 122 and torque bar 108. During compression of brake stack 120 and deceleration of rotor discs 122, torque bars 108, and wheel 102, high compression loads and high torque loads maybe transferred to and/or through rotor clips 123, causing wear. In various embodiments, rotor clips 123 may be subject to vibration and heat, causing wear. In various embodiments, rotor clips 123 may protect rotor discs 122 and rotor disc lugs 124 from excessive wear. In various embodiments, rotor clips 123 may be discarded when wear exceeds allowable limits.

Other components of brake assembly 100 may be discarded when wear exceeds allowable limits. In various embodiments, brake assembly 100 may comprise a plurality of torque bar bushings. Torque bar bushings may be disposed between torque bars 108 and wheel 102. Torque bar bushings may protect torque bars 108 and wheel 102 from excessive wear. In various embodiments, brake assembly 100 may comprise a plurality of stator clips. Stator clips may be disposed on stator lugs 125 and/or may couple stators 126 to torque plate 128. Stator clips may protect stator lugs 125, stators 126, and/or torque plate 128 from excessive wear.

In various embodiments, rotor clips and/or other sacrificial components may comprise a cobalt-chromium alloy. In various embodiments, the cobalt-chromium alloy may comprise any combination of metals such as cobalt, nickel, iron, aluminum, boron, carbon, chromium, manganese, molybdenum, phosphorus, sulfur, silicon, and/or titanium. In various embodiments, rotor clips may comprise a cobalt-chromium alloy having favorable wear characteristics, including high temperature, friction, and compression allowances, such as, for example, a Stellite® alloy. In various embodiments, rotor clips and/or other sacrificial components may comprise any suitable metal or metal alloy.

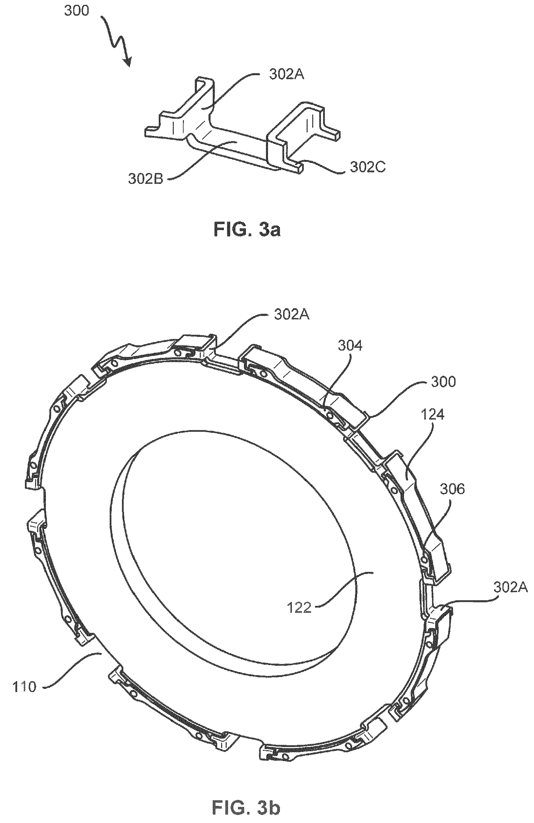

With reference to FIGs. 3a and 3b, a rotor clip in accordance with various embodiments may comprise a floating rotor clip 300. In various embodiments, floating rotor clip 300 may comprise a wear face 302A, 302B, 302C. In various embodiments, wear face 302A may comprises a lateral face of a floating rotor clip 300 configured to be in at least partial contact with, and disposed adjacent to, a lateral face of torque bar 108. In various embodiments, wear face 302B may comprise a circumferential face of a floating rotor clip 300 configured to be in at least partial contact with, and disposed radially inward of, a radially inward face of torque bar 108. In various embodiments, wear face 302C may comprise a retainer face of a floating rotor clip 300 configured to be in at least partial contact with, and disposed adjacent to, a face of retainer bar 304 (discussed below). Wear face 302A, 302B, 302C may comprise exemplary wear faces of floating rotor clip 300; however, in various embodiments, floating rotor clip 300 may comprise a plurality of wear faces. In various embodiments, wear face 302A, 302B, 302C may comprise a surface of floating rotor clip 300 configured to be in physical contact with at least one of torque bar 108 (with momentary reference to FIGs. 1 and 2), rotor disc 122, rotor disc lug 124, and/or a retainer bar 304 (discussed below).

In various embodiments, floating rotor clip 300 may be coupled to rotor disc 122 and may be disposed on and between adjacent rotor disc lugs 124 of rotor disc 122. In various embodiments, floating rotor clip 300 may be configured to define at least a portion of torque bar channel 110. In various embodiments, floating rotor clip 300 may be coupled indirectly to rotor disc 122 by at least one retainer bar 304. In various embodiments, retainer bar 304 may be coupled to rotor disc 122 by at least one retainer rivet 306 and may be disposed on an axial face of rotor disc lug 124. In various embodiments, at least a portion of retainer bar 304 may be disposed radially outward of at least a portion of floating rotor clip 300, thereby restricting movement of floating rotor clip 300 in a radially outward direction.

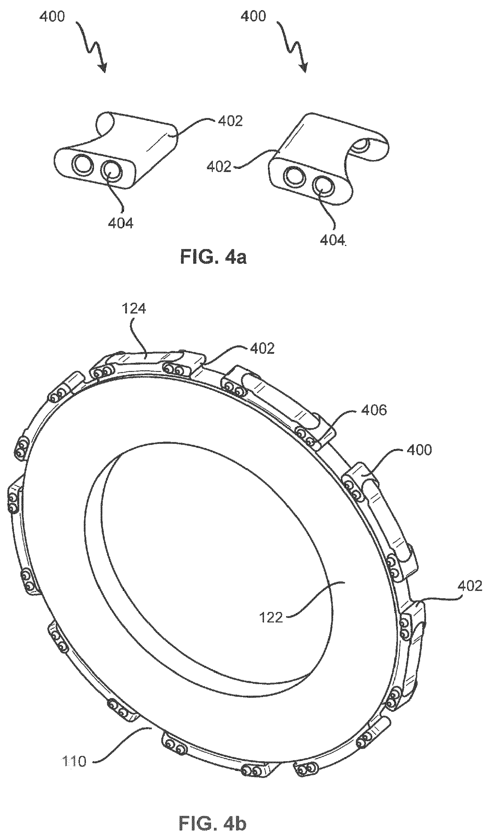

With reference to FIGs. 4a and 4b, a rotor clip may in accordance with various embodiments comprise a half cap rotor clip 400. In various embodiments, half cap rotor clip 400 may comprise at least one wear face 402. In various embodiments, wear face 402 may comprise a surface of half cap rotor clip 400 configured to be in physical contact with at least one of torque bar 108 (with momentary reference to FIGs. 1 and 2), rotor disc 122, and/or rotor disc lug 124.

In various embodiments, half cap rotor clip 400 may comprise at least one rivet aperture 404 and may be coupled to rotor disc 122 by at least one clip rivet 406. Clip rivet 406 may be disposed in rivet aperture 404. Rivet aperture 404 may be disposed in a surface of half cap rotor clip 400 such that clip rivet 406 is coupled to an axial face of rotor disc lug 124. In various embodiments, one or more half cap rotor clips 400 may be disposed on the lateral ends of rotor disc lugs 124 and may extend a distance toward the radial median of rotor disc lugs 124.

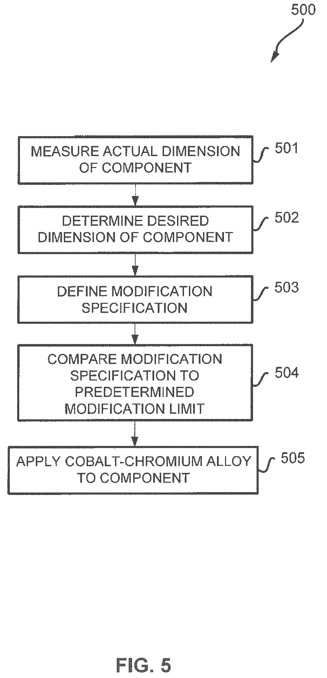

In various embodiments, rotor clips and/or other brake assembly components may require repair or redesign as a result of wear on the component and/or other brake assembly components. FIG. 5 provides a method 500 in accordance with various embodiments for modifying a brake assembly component comprising measuring an actual dimension of the brake assembly component (Step 501), determining a desired dimension of the brake assembly component (Step 502) and comparing the desired dimension to the actual dimension in order to define a modification specification (Step 503).

In various embodiments, the actual dimension of a component may comprise at least one of the length, width, thickness, angle, radius of curvature, or other aspect of any plane, surface, or portion of the component, and/or the weight, density, or any other characteristic of the component affecting operational performance. For example and with reference to FIG. 3a, the actual dimension of a floating rotor clip 300 may comprise the length, width, and/or depth of a wear face 302A, 302B, 302C. For example and with reference to FIG. 4a, the actual dimension of a half cap rotor clip 400 may comprise the length, width, and/or depth of a wear face 402. The actual dimension of the component may be measured by any suitable means.

In various embodiments, the desired dimension of the component may comprise at least one of the length, width, thickness, angle, radius of curvature, or other aspect of any plane, surface, or portion of the component, and/or the weight, density, or any other characteristic of the component affecting operational performance. In various embodiments, the desired dimension may comprise an aspect or characteristic of the component expected as a result of performing method 500. For example and with reference to FIG. 3a, the desired dimension of a floating rotor clip 300 may comprise the length, width, and/or depth of a wear face 302A, 302B, 302C. For example and with reference to FIG. 4a, the desired dimension of a half cap rotor clip 400 may comprise the length, width, and/or depth of a wear face 402.

In various embodiments, the desired dimension may be predetermined. In various embodiments, the desired dimension may or may not comprise an original dimension of the component. As used herein, an original dimension of a component may correspond to a dimension of the component before it experienced any wear. In various embodiments, the desired dimension may exceed the original dimension.

In various embodiments, the modification specification may define the location, quantity, density, and/or type of material with which the component is modified using an additive manufacturing process. In various embodiments, the component comprises the same type of material as that with which the component will be modified. For example, cobalt-chromium alloy may be used to modify a cobalt-chromium alloy component using an additive manufacturing process. In various embodiments, the component comprises a different type of material than that with which the component will be modified.

In various embodiments, method 500 may further comprise comparing the modification specification to a predetermined modification limit (Step 504). The predetermined modification limit may be defined by cost and/or operational limitations. In various embodiments, the predetermined modification limit may comprise certain types of damage to a rotor clip, such as a crack, and/or structural failure not capable of repair by additive manufacturing processes. In various embodiments, the predetermined modification limit may comprise a maximum modification specification, beyond which additive manufacturing processes may be undesirable. In various embodiments, modification of the component may be in response to the modification specification being within the predetermined modification limit.

In various embodiments, method 500 may further comprise using an additive manufacturing process to alter the brake assembly component (Step 505). In various embodiments, alteration of the brake assembly component (Step 505) may comprise repair of worn and/or damaged portions of the component. In various embodiments, alteration of the brake assembly component (Step 505) may comprise redesign of portions of the component to meet changed operational requirements. In various embodiments, alteration of the brake assembly component (Step 505) may comprise applying cobalt-chromium alloy to the component until the desired dimensions are achieved.

In various embodiments, wear faces of rotor clips are eroded causing a decrease in the size, weight, density, shape, and/or uniformity of the rotor clips. In various embodiments, method 500 may comprise repairing a rotor clip such that the desired dimensions are equivalent to the original dimensions of the rotor clip.

In various embodiments, vibration of rotor clips may cause wear, damage, and/or erosion to other components of a brake assembly. For example, rotor clips may cause erosion of adjacent portions of rotor lugs and/or rotor discs. In various embodiments, method 500 may comprise modifying a rotor clip so as to conform to the configuration of an eroded rotor lug and/or rotor disc. Stated differently, method 500 may comprise modifying a rotor clip such that the desired dimensions exceed the original dimensions of the rotor clip.

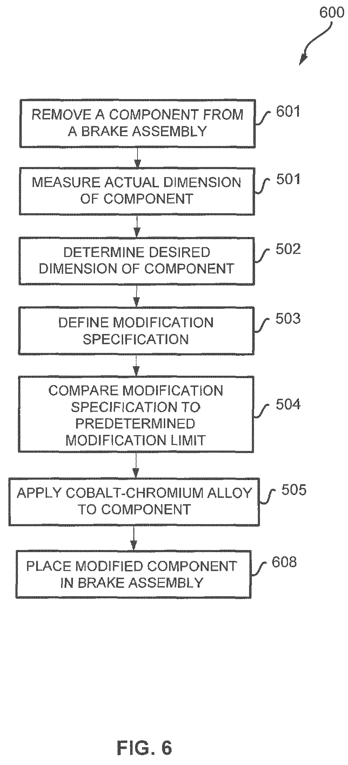

FIG. 6 provides a method of repairing a brake assembly component in accordance with various embodiments comprising removing a brake assembly component from the brake assembly (Step 601), modifying the brake assembly component to obtain a modified cobalt-chromium alloy component, and placing the modified cobalt-chromium alloy component in the brake assembly (Step 608). In various embodiments, the modifying step comprises measuring an actual dimension of the brake assembly component (Step 501), determining a desired dimension of the brake assembly component (Step 502), comparing the desired dimension to the actual dimension in order to define a modification specification (Step 503), comparing the modification specification to a predetermined modification limit (Step 504), and applying cobalt-chromium alloy to the brake assembly component until the desired dimension is achieved (Step 505).

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Devices and methods are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for modifying a brake assembly component (500), comprising:
measuring an actual dimension of the brake assembly component (501);
determining a desired dimension of the brake assembly component (502);
comparing the desired dimension to the actual dimension to define a modification specification (503); and
using an additive manufacturing process to alter the brake assembly component (505).

2. The method of claim 1, wherein the brake assembly component comprises a cobalt-chromium alloy.

3. The method of claim 1 or 2, wherein the additive manufacturing process (505) comprises applying a cobalt-chromium alloy to the brake assembly component until the desired dimension is achieved.

4. The method of claim 3, wherein the desired dimension of the brake assembly component is equivalent to an original dimension of the brake assembly component.

5. The method of claim 3, wherein the desired dimension of the brake assembly component exceeds an original dimension of the brake assembly component.

6. The method of claim 3, further comprising comparing the modification specification to a predetermined modification limit (504).

7. The method of claim 6, wherein the additive manufacturing process (505) is in response to the modification specification being within the predetermined modification limit.

8. The method of any preceding claim, wherein the brake assembly component comprises a floating rotor clip (300).

9. The method of any preceding claim, wherein the brake assembly component comprises a half cap rotor clip (400).

10. A method of repairing a brake assembly (600), comprising:
removing a brake assembly component from the brake assembly (601);
modifying the brake assembly component to form a modified cobalt-chromium alloy component; and
placing the modified cobalt-chromium alloy component in the brake assembly (608).

11. The method of claim 10, wherein the modifying step comprises:
measuring an actual dimension of the brake assembly component;
determining a desired dimension of the brake assembly component (502);
comparing the desired dimension to the actual dimension to define a modification specification (503); and
applying a cobalt-chromium alloy to the brake assembly component until the desired dimension is achieved (505).

12. The method of claim 11, further comprising comparing the modification specification to a predetermined modification limit (504).

13. The method of claim 12, wherein the modifying step is in response to the modification specification being within the predetermined modification limit.

14. The method of any of claims 10 to 13, wherein the brake assembly component comprises a floating rotor clip (300).

15. The method of any of claims 10 to 13, wherein the brake assembly component comprises a half cap rotor clip (400).
